# EUROPEAN PATENT APPLICATION

(11) **EP 4 091 701 A1**
(43) Date of publication of application: **23.11.2022**
(21) Application number: 22173715.8
(22) Date of filing: 17.05.2022
(51) Int. Cl.: B01D 53/32, B01D 53/04

(54) **CARBON DIOXIDE RECOVERY SYSTEM**

(30) Priority: 19.05.2021 JP 2021084307
(71) Applicant: DENSO CORPORATION, Aichi-pref., 448-8661 (JP)
(72) Inventor: IIJIMA, Go, Kariya-city, 448-8661 (JP); TAKEZAKI, Hiroki, Kariya-city, 448-8661 (JP)
(74) Representative: TBK

(57) **Abstract**

A carbon dioxide recovery system is configured to separate carbon dioxide from gas containing the carbon dioxide via an electrochemical reaction and includes an electrochemical cell (101) including a working electrode (102) and a counter electrode (103). The working electrode includes a CO₂ adsorbent. The CO₂ adsorbent is configured to, when a first voltage is applied between the working electrode and the counter electrode, take in electrons flowing from the counter electrode to the working electrode and adsorb the carbon dioxide by a Coulomb force of the electrons without bonding to the carbon dioxide by sharing an electron orbital with the carbon dioxide. The CO₂ adsorbent is configured to, when a second voltage different from the first voltage is applied between the working electrode and the counter electrode, discharge the electrons from the working electrode to the counter electrode and desorb the carbon dioxide.

## Description

### TECHNICAL FIELD

The present disclosure relates to a carbon dioxide recovery system that recovers CO₂ from CO₂ containing gas.

### BACKGROUND

As a method for recovering CO₂, a thermal adsorption/desorption method in which CO₂ is adsorbed and desorbed by temperature fluctuations, a pressure adsorption/desorption method in which CO₂ is adsorbed and desorbed by pressure fluctuations, and an electric field adsorption/desorption method in which CO₂ is electrochemically adsorbed and desorbed have been known. The electric field adsorption/desorption method has advantages that the adsorbed amount of CO₂ can be significantly changed by turning the electric field on and off, and the input energy is not released without contributing to CO₂ adsorption/desorption. Thus, the electric field adsorption/desorption method is more efficient than the thermal adsorption/desorption method and pressure adsorption/desorption method.

JP 2008-528285 A discloses a gas separation device that separates reaction gas (e.g., CO₂) from a gaseous mixture by an electric field adsorption/desorption method. The device includes a porous anode impregnated with an adsorptive compound and a porous cathode impregnated with a conductive liquid. Then, by supplying electric power from the power supply device to the anode and the cathode, the reaction gas is adsorbed or desorbed by the adsorptive compound.

### SUMMARY

However, in the device of JP 2008-528285 A, an acid-base reaction is used for adsorption and desorption of the reaction gas, and the reaction gas is adsorbed by a chemical bond between a specific element of the adsorptive compound and the reaction gas. Therefore, the reaction to adsorb and desorb the reaction gas takes time, and CO₂ recovery efficiency is lowered.

In view of the above points, it is an objective of the present disclosure to suppress a decrease in CO₂ recovery efficiency of an electric field adsorption/desorption carbon dioxide recovery system using an electrochemical cell.

In order to achieve the above objective, according to one aspect of the present disclosure, a carbon dioxide recovery system that separates carbon dioxide from gas containing the carbon dioxide via an electrochemical reaction is provided. The carbon dioxide recovery system includes an electrochemical cell including a working electrode and a counter electrode. The working electrode includes a CO₂ adsorbent. The CO₂ adsorbent is configured to, when a first voltage is applied between the working electrode and the counter electrode, take in electrons flowing from the counter electrode to the working electrode and adsorb the carbon dioxide by a Coulomb force of the electrons without bonding to the carbon dioxide by sharing an electron orbital with the carbon dioxide. The CO₂ adsorbent is configured to, when a second voltage different from the first voltage is applied between the working electrode and the counter electrode, discharge the electrons from the working electrode to the counter electrode and desorb the carbon dioxide.

As a result, the CO₂ adsorbent adsorbs CO₂ by the Coulomb force of electrons, so that the CO₂ adsorbent easily desorbs CO₂ compared to a material that adsorbs CO₂ through a chemical bond between a specific element of the material and CO₂ (i.e., a bond that shares an electron orbital with CO₂). Therefore, it is possible to suppress decrease in CO₂ adsorption capacity and decrease in CO₂ recovery efficiency.

### BRIEF DESCRIPTION OF DRAWING

FIG. 1 is a diagram illustrating a carbon dioxide recovery system of the first embodiment.
FIG. 2 is a diagram illustrating a CO₂ recovery device.
FIG. 3 is a cross-sectional view of an electrochemical cell.
FIG. 4 is a diagram illustrating a CO₂ adsorption state at a working electrode.
FIG. 5 is a diagram for explaining an operation of the CO₂ recovery device in a CO₂ recovery mode and a CO₂ discharge mode.
FIG. 6 is a diagram for explaining CO₂ adsorption by a CO₂ adsorbent of the first embodiment.
FIG. 7 is a diagram for explaining CO₂ desorption by the CO₂ adsorbent of the first embodiment.
FIG. 8 is a diagram for explaining CO₂ adsorption by a CO₂ adsorbent of the second embodiment.
FIG. 9 is a diagram for explaining CO₂ adsorption by a CO₂ adsorbent of the third embodiment.
FIG. 10 is a table illustrating current efficiencies of CO₂ adsorbents in examples and comparative examples.

### DESCRIPTION OF EMBODIMENTS

### (First embodiment)

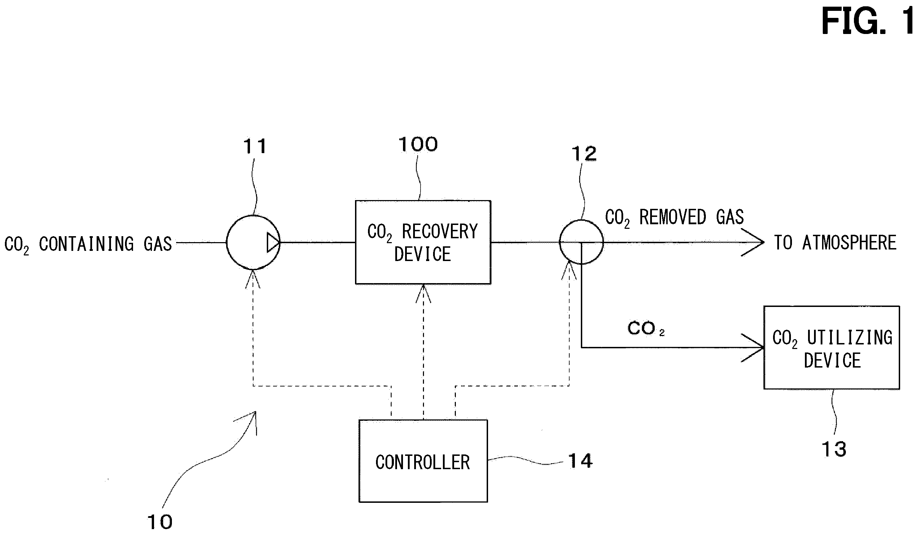

Hereinafter, the first embodiment of the present disclosure will be described with reference to the drawings. As shown in FIG. 1, a carbon dioxide recovery system 10 of the present embodiment includes a compressor 11, a CO₂ recovery device 100, a passage switching valve 12, a CO₂ utilizing device 13, and a controller 14.

The compressor 11 pumps CO₂ containing gas to the CO₂ recovery device 100. The CO₂ containing gas is mixed gas containing CO₂ and gas other than CO₂, and for example, the atmosphere or exhaust gas of an internal combustion engine can be used as the CO₂ containing gas.

The CO₂ recovery device 100 is a device that separates and recovers CO₂ from the CO₂ containing gas. The CO₂ recovery device 100 discharges CO₂ removed gas that is residual gas after CO₂ is recovered from the CO₂ containing gas, or CO₂ recovered from the CO₂ containing gas. The configuration of the CO₂ recovery device 100 will be described in detail later.

The passage switching valve 12 is a three-way valve that switches a passage for discharged gas from the CO₂ recovery device 100. The passage switching valve 12 switches an outlet of the passage for the discharged gas toward the atmosphere when the CO₂ removed gas is discharged from the CO₂ recovery device 100, and the outlet of the passage of the discharged gas toward the CO₂ utilizing device 13 when CO₂ is discharged from the CO₂ recovery device 100.

The CO₂ utilizing device 13 is a device that utilizes CO₂. The CO₂ utilizing device 13 may be a storage tank for storing CO₂ or a conversion device for converting CO₂ into fuel. As the conversion device, a device that converts CO₂ into a hydrocarbon fuel such as methane can be used. The hydrocarbon fuel may be gaseous fuel at normal temperature and pressure, or may be liquid fuel at normal temperature and pressure.

The controller 14 is configured of a well-known microcomputer including a CPU, a ROM, a RAM and the like, and peripheral circuits thereof. The controller 14 performs various calculations and processes based on control programs stored in the ROM, and controls actuations of the various devices connected to the output side. The controller 14 of the present embodiment performs an operation control of the compressor 11, an operation control of the CO₂ recovery device 100, a passage switching control of the passage switching valve 12 and the like.

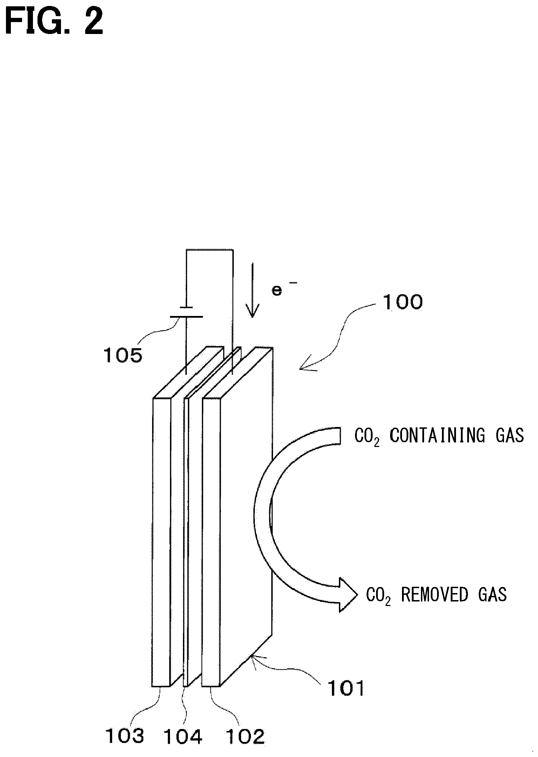

Next, the CO₂ recovery device 100 will be described with reference to FIG. 2. As shown in FIG. 2, the CO₂ recovery device 100 includes an electric field adsorption/desorption electrochemical cell 101 configured to adsorb and desorb CO₂ via an electrochemical reaction. The electrochemical cell 101 has a working electrode 102, a counter electrode 103 and an insulating layer 104. In the example shown in FIG. 2, the working electrode 102, the counter electrode 103 and the insulating layer 104 are each formed in a plate shape. In FIG. 2, the working electrode 102, the counter electrode 103 and the insulating layer 104 are illustrated to have distances between them, but actually, these components are arranged to be in contact with each other.

The electrochemical cell 101 may be housed in a container (not shown). The container may define a gas inlet for introducing the CO₂ containing gas into the container and a gas outlet for discharging the CO₂ removed gas and CO₂ out of the container.

The CO₂ recovery device 100 is configured to adsorb and desorb CO₂ via an electrochemical reaction of the electrochemical cell 101, thereby separating and recovering CO₂ from the CO₂ containing gas. The CO₂ recovery device 100 includes a power supply 105 that applies a predetermined voltage to the working electrode 102 and the counter electrode 103, and can change the potential difference between the working electrode 102 and the counter electrode 103. The working electrode 102 is a negative electrode, and the counter electrode 103 is a positive electrode.

The electrochemical cell 101 can be switched between a CO₂ recovery mode in which CO₂ is recovered at the working electrode 102 and a CO₂ discharge mode in which CO₂ is discharged from the working electrode 102 by changing the potential difference between the working electrode 102 and the counter electrode 103. The CO₂ recovery mode is a charging mode for charging the electrochemical cell 101, and the CO₂ discharge mode is a discharging mode for discharging the electrochemical cell 101.

In the CO₂ recovery mode, a first voltage V1 is applied between the working electrode 102 and the counter electrode 103, and electrons flows from the counter electrode 103 to the working electrode 102. At the first voltage V1, the counter electrode potential is greater than the working electrode potential. The first voltage V1 may fall within the range between 0.5 V and 2.0 V.

In the CO₂ discharge mode, a second voltage V2 is applied between the working electrode 102 and the counter electrode 103, and electrons flows from the working electrode 102 to the counter electrode 103. The second voltage V2 is different from the first voltage V1. The second voltage V2 is a voltage lower than the first voltage V1, and the magnitude relationship between the working electrode potential and the counter electrode potential is not limited. That is, in the CO₂ discharge mode, the counter electrode potential may be greater than, equal to or less than the working electrode potential.

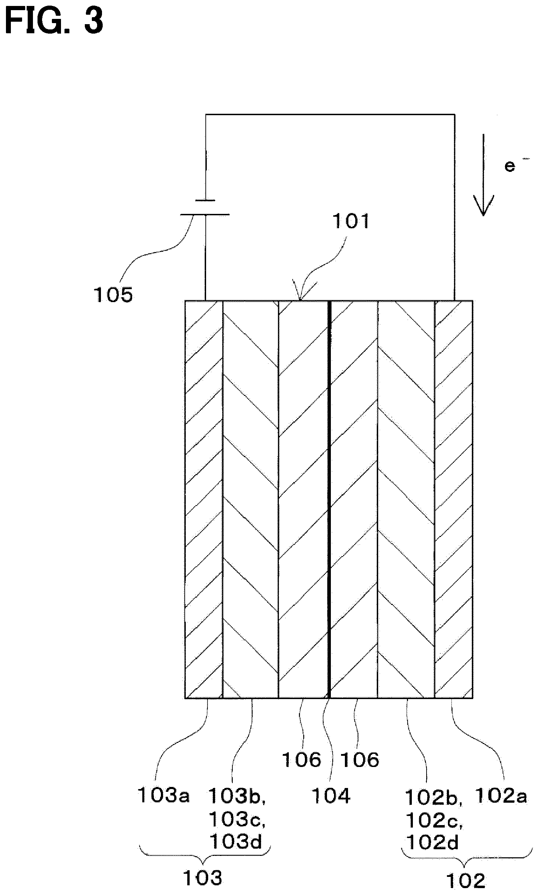

As shown in FIG. 3, the working electrode 102 includes a working electrode substrate 102a, a CO₂ adsorbent 102b, a working electrode conductive substance 102c and a working electrode binder 102d. In FIG. 3, for convenience, the CO₂ adsorbent 102b, the working electrode conductive substance 102c and the working electrode binder 102d are shown in a different position from a position of the working electrode substrate 102a. However, actually, the CO₂ adsorbent 102b, the working electrode conductive substance 102c and the working electrode binder 102d are disposed inside the porous working electrode substrate 102a.

The working electrode substrate 102a is a porous conductive material having pores through which gas containing CO₂ can pass. As the working electrode substrate 102a, for example, a carbonaceous material or a metal material can be used. As the carbonaceous material constituting the working electrode substrate 102a, for example, carbon paper, carbon cloth, non-woven carbon mat, porous gas diffusion layer (GDL) and the like can be used. As the metal material constituting the working electrode substrate 102a, for example, a metal mesh that a metal (e.g., Al, Ni, etc.) is formed into a mesh shape can be used.

The CO₂ adsorbent 102b adsorbs CO₂ by receiving electrons, and desorbs the adsorbed CO₂ by releasing electrons. The CO₂ adsorbent 102b will be described in detail later.

The working electrode conductive substance 102c forms a conductive path to the CO₂ adsorbent 102b. As the working electrode conductive substance 102c, a carbon material such as carbon nanotube, carbon black and graphene can be used. In this embodiment, the CO₂ adsorbent 102b and the working electrode conductive substance 102c are mixed.

Mixing the CO₂ adsorbent 102b and the working electrode conductive substance 102c may be performed by dissolving the working electrode conductive substance 102c in an organic solvent such as NMP (N-methylpyrrolidone) and bringing the CO₂ adsorbent 102b into contact with the working electrode conductive substance 102c dispersed in the organic solvent. The contact between the working electrode conductive substance 102c and the CO₂ adsorbent 102b may be realized by immersing the working electrode substrate 102a containing the CO₂ adsorbent 102b in a solvent in which the working electrode conductive substance 102c is dispersed and dip-coating the working electrode substrate 102a. As a result, the working electrode conductive substance 102c and the CO₂ adsorbent 102b can be uniformly in contact with each other.

The working electrode binder 102d is provided to hold the CO₂ adsorbent 102b in the working electrode substrate 102a. The working electrode binder 102d has an adhesive force and is provided between the CO₂ adsorbent 102b and the working electrode substrate 102a.

In this embodiment, the CO₂ adsorbent 102b, the working electrode conductive substance 102c and the working electrode binder 102d are used in a mixed state. The CO₂ adsorbent 102b, the working electrode conductive substance 102c and the working electrode binder 102d are mixed, and this mixture adheres to the working electrode substrate 102a.

As the working electrode binder 102d, a conductive resin can be used. As the conductive resin, an epoxy resin containing Ag or the like as a conductive filler, a fluorocarbon polymer such as polytetrafluoroethylene (PTFE) and polyvinylidene fluoride (PVDF) or the like can be used.

The working electrode binder 102d can be brought into contact with the working electrode substrate 102a containing the CO2 adsorbent 102b by using an organic solvent similarly to the working electrode conductive substance 102c.

Alternatively, the raw material of the working electrode binder 102d and the CO2 adsorbent 102b may be dispersed and mixed using a homogenizer or the like, and then the mixture may be pressure-bonded to the working electrode substrate 102a or spray-coated on the working electrode substrate 102a.

The counter electrode 103 has a similar configuration to the working electrode 102, and includes a counter electrode substrate 103a, an electrically active auxiliary material 103b, a counter electrode conductive substance 103c and a counter electrode binder 103d.

The electrically active auxiliary material 103b is an auxiliary electrically active species that transfers electrons to and from the CO₂ adsorbent 102b. As the electrically active auxiliary material 103b, for example, a metal complex that can transfer electrons by changing the valence of the metal ion can be used. Examples of such metal complex include cyclopentadienyl metal complexes such as ferrocene, nickelocene and cobaltocene, and porphyrin metal complexes. These metal complexes may be a polymer or a monomer.

Further, as the electrically active auxiliary material 103b, an organic compound such as phenothiazine, an inorganic compound such as RuO₂, MnO₂ and MoS₂, and a carbon material such as carbon black and activated carbon can also be also used.

In this embodiment, polyvinyl ferrocene shown below is used as the electrically active auxiliary material 103b. Ferrocene transfers electrons by changing the valence of Fe into divalent or trivalent.

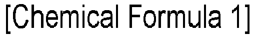

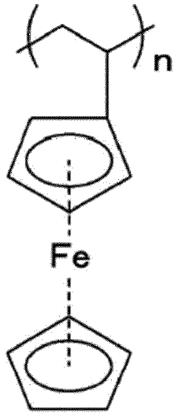

The insulating layer 104 is arranged between the working electrode 102 and the counter electrode 103, and separates the working electrode 102 and the counter electrode 103 from each other. The insulating layer 104 is an insulating ion permeable membrane that prevents physical contact between the working electrode 102 and the counter electrode 103 to suppress an electrical short circuit and that allows ions to permeate therethrough.

As the insulating layer 104, a separator or a gas layer such as air can be used. In this embodiment, a porous separator is used as the insulating layer 104. As the material of the separator, a cellulose membrane, a polymer, a composite material of a polymer and a ceramic, or the like can be used.

An electrolyte material 106 having ionic conductivity is provided between the working electrode 102 and the counter electrode 103. The electrolyte material 106 is provided between the working electrode 102 and the counter electrode 103 via the insulating layer 104. The electrolyte material 106 covers the working electrode 102, the counter electrode 103 and the insulating layer 104.

The electrolyte material 106 is in contact with the CO₂ adsorbent 102b. Ions contained in the electrolyte material 106 promote electron attraction of the CO₂ adsorbent 102b when the CO₂ adsorbent 102b binds to CO₂. The ions contained in the electrolyte material 106 do not directly react with a CO₂ adsorption site of the CO₂ adsorbent 102b that adsorbs CO₂.

As the electrolyte material 106, an ionic liquid, a solid electrolyte or the like can be used. An ionic liquid is a salt of a liquid having non-volatility under normal temperature and pressure. When an ionic liquid is used as the electrolyte material 106, the ionic liquid may be gelled to prevent elution of the ionic liquid from the electrochemical cell 101. When a solid electrolyte is used as the electrolyte material 106, it is desirable to use an ionomer made of a polymer electrolyte or the like to increase a contact area with the CO₂ adsorbent 102b.

Examples of the ionic liquid include 1-ethyl-3-methylimidazolium bis(trifluoromethanesulfonyl)imide ([EMIM][Tf₂N]), 1-butyl-3-methylimidazolium bis(trifluoromethanesulfonyl)imide ([BMIM][Tf₂N]), 1-butyl-3-methylimidazolium tetrafluoroborate ([BMIM][BF_{4]}), 1-ethyl-1-propylpyrrolidinium bis(trifluoromethylsulfonyl)imide, N,N,N-trimethyl-N-propylammonium bis(trifluoromethanesulfonyl)imide, 1-ethyl-3-methylimidazolium tetrafluoroborate, 1-butyl-1-methylpyrrolidinium bis(trifluoromethanesulfonyl)imide, etc.

Alternatively, H₂SO₄, Na₂SO₄, KOH or the like can be used as the electrolyte material 106.

Here, the CO₂ adsorbent 102b of the present embodiment will be described. The CO₂ adsorbent 102b is a material whose chemical skeleton does not change when adsorbing CO₂. In this embodiment, the CO₂ adsorbent 102b is a material that can transfer electrons without changing its chemical skeleton when a negative potential is applied to the counter electrode. The CO₂ adsorbent 102b is a material that allows electric charge to be delocalized in the entire material without concentrating on a specific element in its chemical structure when receiving electrons from the counter electrode 103.

When the first voltage V1 is applied between the working electrode 102 and the counter electrode 103, electrons flow from the counter electrode 103 to the working electrode 102, and the CO₂ adsorbent 102b takes in the electrons and adsorbs CO₂ by the Coulomb force of the electrons. When the second voltage V2 is applied between the working electrode 102 and the counter electrode 103, electrons flow from the working electrode 102 to the counter electrode 103, and the CO₂ adsorbent 102b discharges the electrons and desorbs CO₂.

When the CO₂ adsorbent 102b adsorbs CO₂, the electrons taken in by the CO₂ adsorbent 102b and the ions contained in the electrolyte material 106 form an electric double layer. By forming the electric double layer in adsorbing CO₂ as described above, electrons can be stably retained on the surface of the CO₂ adsorbent 102b. Therefore, it is possible to adsorb CO₂ diffused in the vicinity of the surface of the CO₂ adsorbent 102b and reaching the surface of the CO₂ adsorbent 102b by the Coulomb force of the electrons.

The CO₂ adsorbent 102b of the present embodiment has the CO₂ adsorption site that takes in electrons when the first voltage V1 is applied between the working electrode 102 and the counter electrode 103 and that discharges the electrons when the second voltage V2 is applied between the working electrode 102 and the counter electrode 103. Since the CO₂ adsorbent 102b has the CO₂ adsorption site capable of taking in electrons in this way, electric capacity of the electric double layer can be increased.

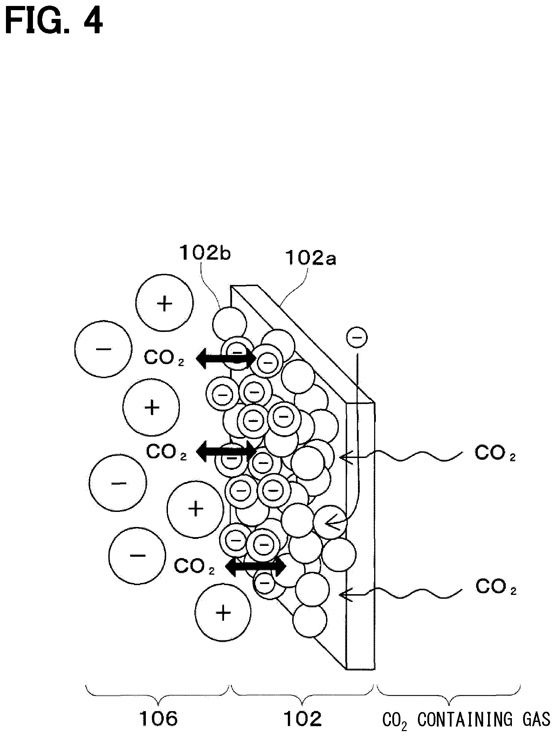

As shown in FIG. 4, the CO₂ adsorbent 102b of the present embodiment adsorbs CO₂ contained in the CO₂ containing gas. In FIG. 4, illustrations of the working electrode conductive substance 102c and the working electrode binder 102d are omitted.

When the CO₂ adsorbent 102b of the present embodiment takes in electrons, the electrons evenly spread over a plurality of elements included in the CO₂ adsorption site. Thus, the electrons are not locally located in a specific element in the CO₂ adsorption site. Further, as described above, since the CO₂ adsorbent 102b takes in electrons and adsorbs CO₂ by the Coulomb force of the electrons, a bonding that shares an electron orbit between the CO₂ adsorbent 102b and CO₂ is not generated when CO₂ is adsorbed. That is, the CO₂ adsorbent 102b does not adsorb CO₂ through a chemical bond with a specific site where the electric charge is localized, but adsorbs CO₂ by the Coulomb force of delocalized electrons that evenly spread over the plurality of elements.

By taking electrons into the CO₂ adsorption site contained in the CO₂ adsorbent 102b, an electric double layer can be formed between the CO₂ adsorption site having an electron bias and the ions contained in the electrolyte material 106, and the electric capacity of the electric double layer can be further increased. In the CO₂ adsorbent 102b, the electrons are delocalized in the CO₂ adsorption site, so that the formation of the electric double layer with the ions of the electrolyte material 106 and the CO₂ adsorption by the Coulomb force of the electrons can be alternately switched at high speed. Therefore, it is possible to achieve both an increase in the electric capacity of the electric double layer and an increase in the CO₂ adsorption force.

The CO₂ adsorbent 102b may be any material that can transfer electrons without changing the structure of its chemical skeleton. The CO₂ adsorbent 102b is a material that can receive an electric charge when a potential more negative than a natural potential is applied to the CO₂ adsorbent 102b. The CO₂ adsorbent 102b does not change its chemical skeleton when transferring electrons, and the electric charge is not concentrated on a specific element of the CO₂ adsorbent 102b.

In this embodiment, an organic compound is used as the CO₂ adsorbent 102b. As the organic compound, for example, an aromatic compound can be used. It is desirable that the aromatic compound contains at least of N and S in the aromatic ring. N and S are elements having high electronegativity. In organic compounds, these elements having high electronegativity serve as the CO₂ adsorption site.

As the organic compound, for example, at least one of benzothiadiazole, polyvinylbenzothiadiazole and polydiazaphthalimide can be used.

Benzothiadiazole has the following structure, and N and S contained in the aromatic ring serve as the CO₂ adsorption site. When benzothiadiazole receives an electron, the electron evenly spreads over N and S, and the electron is delocalized.

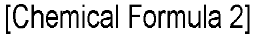

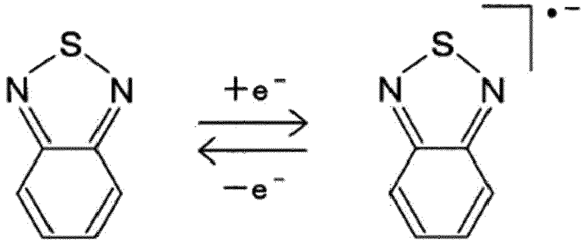

Polydiazaphthalimide has the following structure, and N contained in the aromatic ring serves as the CO₂ adsorption site. When polydiazaphthalimide receives an electron, the electron evenly spreads over N, and the electron is delocalized.

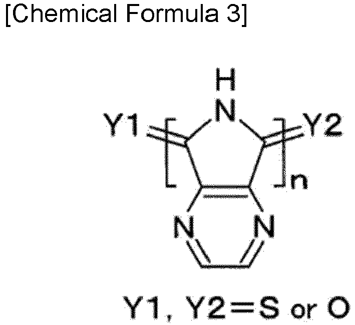

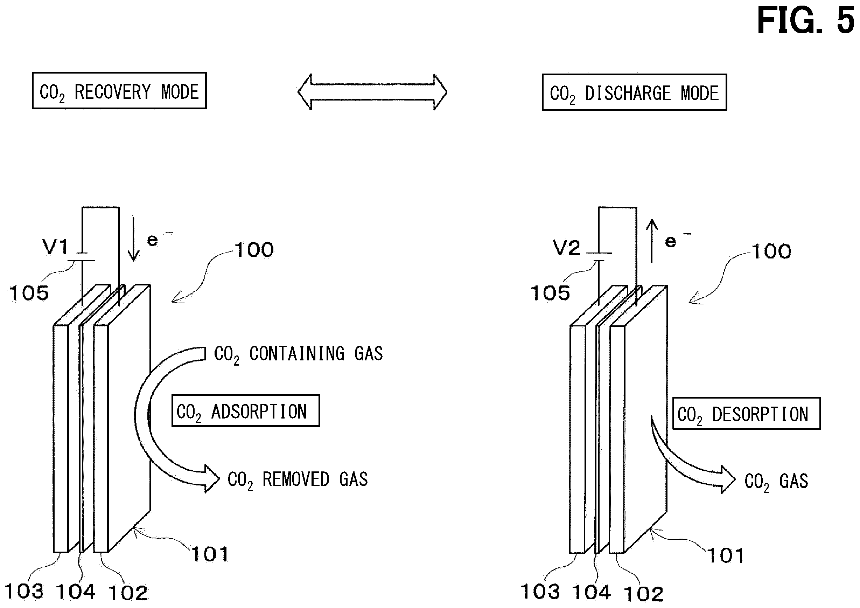

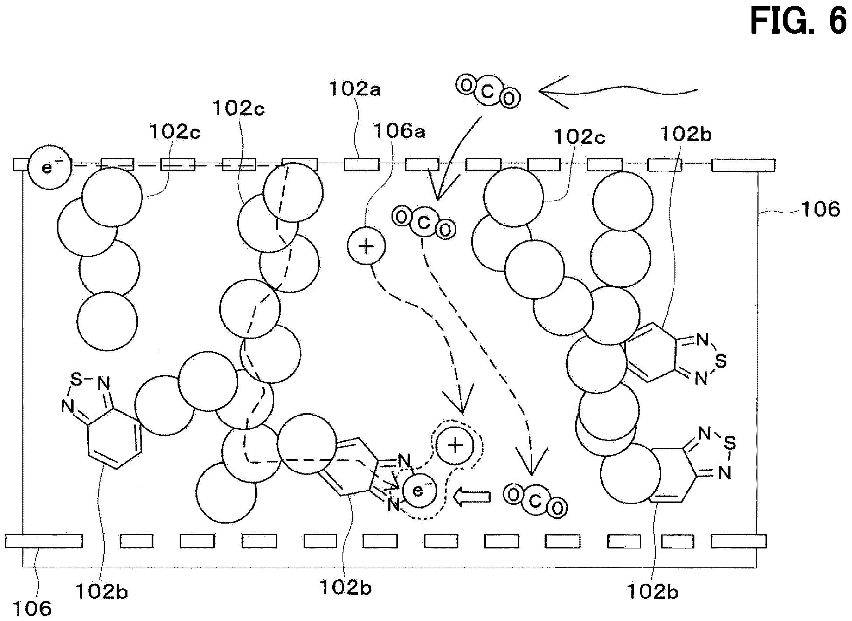

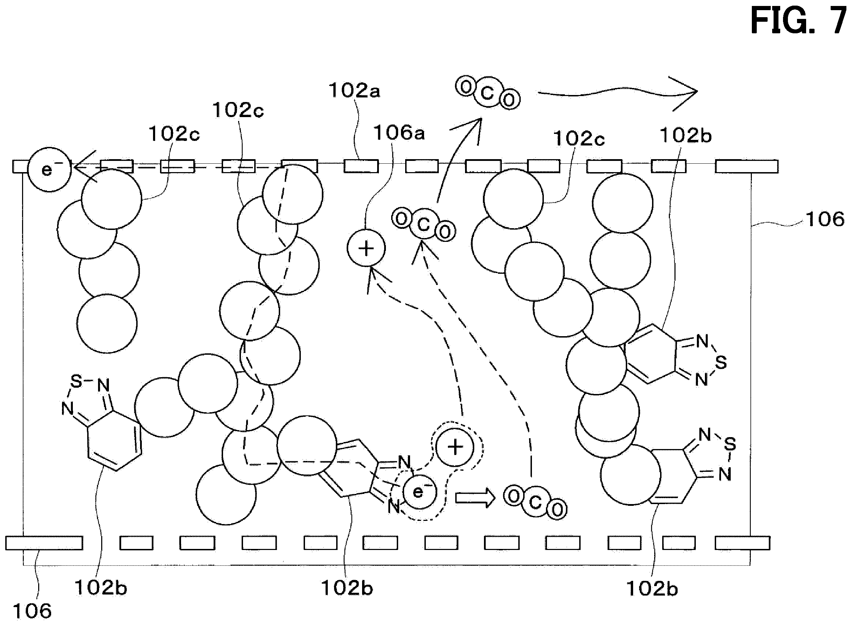

Next, the operation of the carbon dioxide recovery system 10 of the present embodiment will be described with reference to FIGS. 5, 6 and 7. FIGS. 6 and 7 illustrate an example in which benzothiadiazole is used as the CO₂ adsorbent 102b.

As shown in FIG. 5, the carbon dioxide recovery system 10 operates by alternately switching between the CO₂ recovery mode and the CO₂ discharge mode. The operation of the carbon dioxide recovery system 10 is controlled by the controller 14.

At first, the CO₂ recovery mode will be described. In the CO₂ recovery mode, the compressor 11 operates to supply CO₂ containing gas to the CO₂ recovery device 100. In the CO₂ recovery device 100, the voltage applied between the working electrode 102 and the counter electrode 103 is set to the first voltage V1. As a result, electron donation of the electrically active auxiliary material 103b of the counter electrode 103 and electron attraction of the CO₂ adsorbent 102b of the working electrode 102 occur at the same time. The electrically active auxiliary material 103b of the counter electrode 103 discharges electrons to be oxidized, and the electrons are supplied from the counter electrode 103 to the working electrode 102.

As shown in FIG. 6, the electrons flowing to the working electrode 102 move to the CO₂ adsorbent 102b via the working electrode conductive substance 102c. The CO₂ adsorbent 102b made of an organic compound receives electrons to be reduced. When the electrons are taken into the CO₂ adsorption site of the CO₂ adsorbent 102b, an electric double layer is formed between the CO₂ adsorption site having an electron bias and cation 106a of the electrolyte material 106.

As shown below, the CO₂ adsorbent 102b made of the organic compound is strongly polarized by receiving electrons in the CO₂ adsorption site. The part of benzothiadiazole surrounded by the broken line shows the bias of the negative charge.

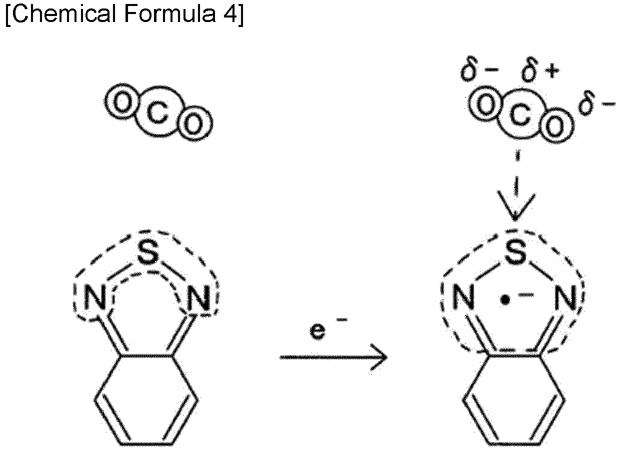

C contained in CO₂ is δ+, and CO₂ is attracted to the CO₂ adsorption site of the CO₂ adsorbent 102b by electrostatic interaction. As a result, CO₂ is adsorbed on the CO₂ adsorbent 102b, and the CO₂ recovery device 100 can recover CO₂ from CO₂ containing gas.

After CO₂ is recovered by the CO₂ recovery device 100, the CO₂ removed gas is discharged from the CO₂ recovery device 100. The passage switching valve 12 switches the outlet of the gas passage toward the atmosphere, and the CO₂ removed gas from the CO₂ recovery device 100 is discharged to the atmosphere.

Next, the CO₂ discharge mode will be described. In the CO₂ discharge mode, the compressor 11 is stopped and the supply of the CO₂ containing gas to the CO₂ recovery device 100 is stopped.

As shown in FIG. 5, in the CO₂ recovery device 100, the voltage applied between the working electrode 102 and the counter electrode 103 is set to the second voltage V2. As a result, electron donation of the CO₂ adsorbent 102b of the working electrode 102 and electron attraction of the electrically active auxiliary material 103b of the counter electrode 103 occur at the same time. The electrically active auxiliary material 103b of the counter electrode 103 receives electrons to be reduced.

As shown in FIG. 7, the CO₂ adsorbent 102b discharges electrons. By discharging the electrons, the CO₂ adsorbent 102b desorbs CO₂ adsorbed by electrostatic interaction.

The CO₂ from the CO₂ adsorbent 102b is discharged from the CO₂ recovery device 100. The passage switching valve 12 switches the outlet of the gas passage toward the CO₂ utilizing device 13, and the CO₂ discharged from the CO₂ recovery device 100 is supplied to the CO₂ utilizing device 13.

According to the present embodiment described above, as the CO₂ adsorbent 102b of the working electrode 102, a material that can transfer electrons without changing the structure of its chemical skeleton and in which the electric charge is delocalized is used. When the first voltage is applied between the working electrode 102 and the counter electrode 103, electrons flow from the counter electrode 103 to the working electrode 102, and the CO2 adsorbent takes in the electrons and adsorbs CO₂ by the Coulomb force of the electrons without bonding to CO₂ by sharing an electron orbit with CO₂. When the second voltage is applied between the working electrode 102 and the counter electrode 103, electrons flow from the working electrode 102 to the counter electrode 103, and the CO₂ adsorbent discharges the electrons and desorbs CO₂.

Since the CO₂ adsorbent 102b of the present embodiment adsorbs CO₂ by the Coulomb force of delocalized electrons, CO₂ can be discharged more easily compared to a material adsorbing CO₂ through a chemical bond with a specific element (i.e., through a bond sharing an electron orbit with CO₂). Therefore, according to the CO₂ adsorbent 102b of the present embodiment, it is possible to suppress decrease in the CO₂ adsorption capacity and decrease in the CO₂ recovery efficiency.

Further, in the carbon dioxide recovery system of the present embodiment, when the CO₂ adsorbent adsorbs CO₂, the electrons taken in by the CO₂ adsorbent and the ions contained in the electrolyte material 106 form an electric double layer. As a result, the electrons can be stably retained on the surface of the CO₂ adsorbent 102b, and the CO₂ diffused in the vicinity of the surface of the CO₂ adsorbent 102b and reaching the surface of the CO₂ adsorbent 102b can be adsorbed by the Coulomb force of the electrons.

Further, the CO₂ adsorbent 102b of the present embodiment has the CO₂ adsorption site that takes in electrons when the first voltage V1 is applied between the working electrode 102 and the counter electrode 103 and that discharges the electrons when the second voltage V2 is applied between the working electrode 102 and the counter electrode 103. This makes it possible to increase the electric capacity of the electric double layer formed by the electrons taken in by the CO₂ adsorbent and the ions contained in the electrolyte material 106.

When the CO₂ adsorbent 102b takes in electrons, the electrons evenly spreads over a plurality of elements contained in the CO₂ adsorption site, and the electrons are not localized in the specific element. Therefore, in the CO₂ adsorbent 102b, the electric double layer formation and the CO₂ adsorption can be alternately switched at high speed, and both increase in the electric capacity of the electric double layer and increase in the CO₂ adsorption force can be achieved at the same time.

### (Second embodiment)

Next, the second embodiment of the present disclosure will be described. Hereinafter, only portions different from the first embodiment will be described.

In the second embodiment, an inorganic compound is used as the CO₂ adsorbent 102b. When an inorganic compound is used as the CO₂ adsorbent 102b, the inorganic compound can be commonly used as the CO₂ adsorbent 102b and the working electrode conductive substance 102c.

The inorganic compound used as the CO₂ adsorbent 102b is a material that can transfer electrons by changing the valence of the contained metal element. The inorganic compound may be at least one of an inorganic oxide, an inorganic nitride, an inorganic chalcogenide-based material, and the like. Examples of the inorganic chalcogenide-based material include sulfide, selenide and telluride.

It is desirable that the inorganic compound contains a main group element that has high electronegativity and that can interact with CO₂. It is desirable that the inorganic compound contains at least one element of O, N, S, Se and Te. In the inorganic compound, these elements having high electronegativity serve as the CO₂ adsorption site.

As the inorganic oxide, for example, RuO₂ or MnO₂ can be used. The inorganic chalcogenide-based material is a compound including a metal element and S, Se or Te, and for example, MoS₂ can be used.

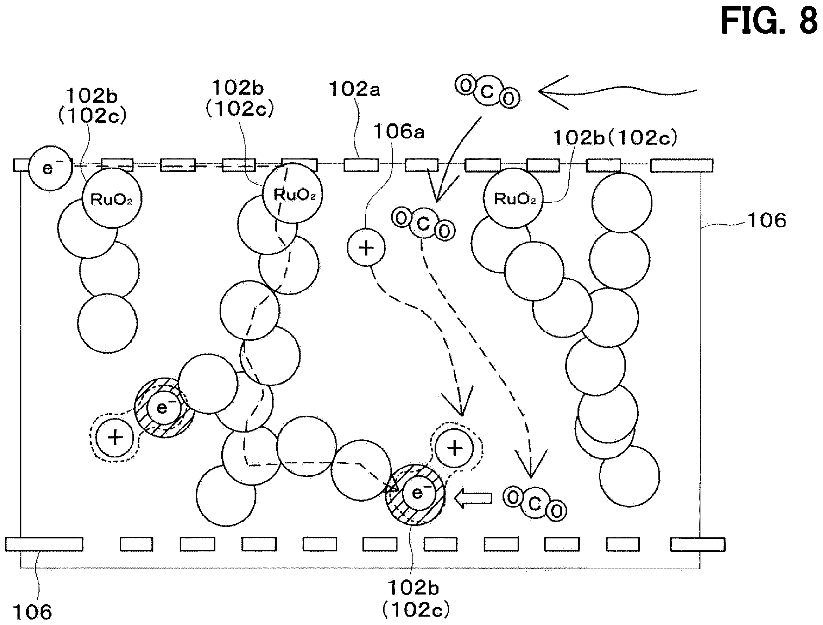

FIG. 8 illustrates CO₂ adsorption when an inorganic compound is used as the CO₂ adsorbent 102b. FIG. 8 illustrates an example in which RuO₂ is used as the CO₂ adsorbent 102b, and the CO₂ adsorbent 102b also serves as the working electrode conductive substance 102c.

As shown in FIG. 8, when electrons flow from the counter electrode 103 to the working electrode 102, a part of the CO₂ adsorbent 102b receives electrons to be reduced through the redox reaction. In FIG. 8, the reduced CO₂ adsorbent 102b is shown in diagonal lines.

The CO₂ adsorbent 102b made of an inorganic compound takes in electrons into the CO₂ adsorption site made of a main group element (O in the case of RuO₂), and forms an electric double layer between the CO₂ adsorption site and the cations 106a of the electrolyte material 106.

The CO₂ adsorbent 102b made of an inorganic compound adsorbs CO₂ on the CO₂ adsorption site (O in the case of RuO₂) by electrostatic interaction.

As shown in the reaction formula below, in a part of RuO₂, the valence of Ru changes from tetravalent to trivalent by receiving electrons, and the valence of Ru changes from trivalent to tetravalent by discharging the electrons.

Ru(IV)O₂ + x[EMIM]⁺ + xe⁻ ←→ Ru(IV)Ru(III)₁₋ₓO₂[EMIM]ₓ⁺

[EMIM]⁺ is a cation 106a of an ionic liquid used as the electrolyte material 106.

In the second embodiment described above, an inorganic compound is used as the CO₂ adsorbent 102b. Also in the configuration of the second embodiment, the same or similar advantages as those of the first embodiment can be obtained, and it is possible to suppress decrease in the CO₂ recovery efficiency of the CO₂ adsorbent 102b.

### (Third Embodiment)

Next, the third embodiment of the present disclosure will be described. Hereinafter, only portions different from the above embodiments will be described.

In the third embodiment, a porous material is used as the CO₂ adsorbent 102b. In the third embodiment, a carbon material is used as the porous material constituting the CO₂ adsorbent 102b.

The carbon material has a porous body and conductivity. When a carbon material is used as the CO₂ adsorbent 102b, the carbon material is commonly used as the CO₂ adsorbent 102b and the working electrode conductive substance 102c. As the carbon material, for example, at least one of graphite, carbon black, carbon nanotube, graphene, and activated carbon can be used.

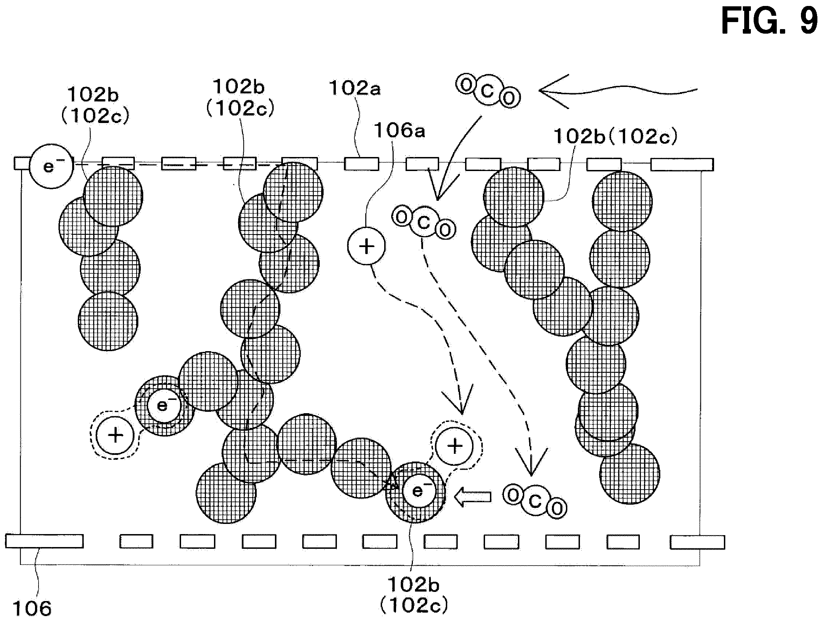

FIG. 9 illustrates CO₂ adsorption when a carbon material is used as the CO₂ adsorbent 102b. In the example shown in FIG. 9, the CO₂ adsorbent 102b also serves as the working electrode conductive substance 102c.

As shown in FIG. 9, when electrons flow from the counter electrode 103 to the working electrode 102, the electrons can conduct to the surface of the CO₂ adsorbent 102b. The CO₂ adsorbent 102b takes in electrons to form an electric double layer with the cations 106a of the electrolyte material 106.

Since the CO₂ adsorbent 102 made of a carbon material has a large contact area with the electrolyte material 106, the electric capacity of the electric double layer increases. Therefore, the amount of CO₂ adsorbed by the CO₂ adsorbent 102 and the adsorption efficiency can be increased.

In the third embodiment described above, a carbon material is used as the CO₂ adsorbent 102b. Also in the configuration of the third embodiment, the same or similar advantages as those of the first embodiment can be obtained, and it is possible to suppress decrease in the CO₂ recovery efficiency of the CO₂ adsorbent 102b.

### (Fourth embodiment)

Next, the fourth embodiment of the present disclosure will be described. Hereinafter, only portions different from the above embodiments will be described.

In the fourth embodiment, a porous material is used as the CO₂ adsorbent 102b. In the fourth embodiment, an organometallic complex is used as the porous material constituting the CO₂ adsorbent 102b. When an organometallic complex is used as the CO₂ adsorbent 102b, it is desirable to mix the working electrode conductive substance 102c made of a carbon material with the organometallic complex.

The organometallic complex is a metal-organic framework (MOF) having a porous structure in which an organic ligand is coordinated and bonded to a metal ion. As the organometallic complex, for example, at least one of CAU-8, HKUST-1 (MOF-199), MOF-801, and MOF-867 can be used.

CAU-8 is an organometallic structure containing Al ion as a metal ion and benzophenone dicarboxylate as an organic ligand. HKUST-1 (MOF-199) is an organometallic structure containing Cu ion as a metal ion and 1,3,5-benzenetricarboxylate as an organic ligand. MOF-801 and MOF-867 are organometallic structures containing Zr ions as metal ions.

The CO₂ adsorbent 102b takes in electrons to form an electric double layer with the cations 106a of the electrolyte material 106. Since the CO₂ adsorbent 102 made of an organometallic complex has a large contact area with the electrolyte material 106, the electric capacity of the electric double layer increases. Therefore, the amount of CO₂ adsorbed by the CO₂ adsorbent 102 and the adsorption efficiency can be increased.

In the fourth embodiment described above, an organometallic complex is used as the CO₂ adsorbent 102b. Also in the configuration of the fourth embodiment, the same or similar advantages as those of the first embodiment can be obtained, and it is possible to suppress decrease in the CO₂ recovery efficiency of the CO₂ adsorbent 102b.

### (Examples)

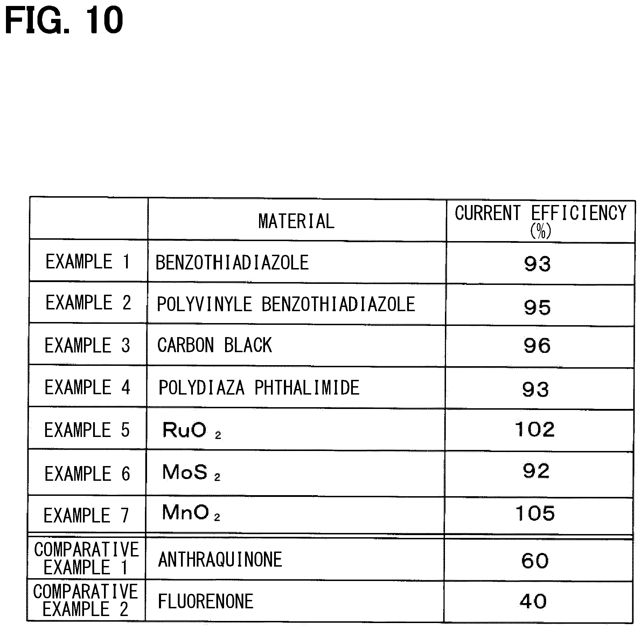

Next, examples of the above embodiments will be described with reference to FIG. 10. The current efficiency when CO₂ is adsorbed on the CO₂ adsorbent 102b will be described with reference to the examples and comparative examples. The current efficiency indicates a ratio of the number of CO₂ molecules adsorbed on the CO₂ adsorbent 102b to the number of electrons flowing to the CO₂ adsorbent 102b.

The CO₂ adsorbents 102b of examples 1 to 7 were respectively benzothiadiazole (example 1), polyvinylbenzothiadiazole (example 2), carbon black (example 3), polydiazaphthalimide (example 4), RuO₂ (example 5), MoS₂ (example 6) and MnO₂ (example 7). As the CO₂ adsorbent 102b, anthraquinone was used in the comparative example 1 and fluorenone was used in the comparative example 2.

As shown in FIG. 10, the current efficiency of example 1 was 93%, the current efficiency of example 2 was 95%, the current efficiency of example 3 was 96%, the current efficiency of example 4 was 93%, the current efficiency of example 5 was 102%, the current efficiency of example 6 was 92% and the current efficiency of example 7 was 105%. The current efficiency of comparative example 1 was 60% and the current efficiency of comparative example 2 was 40%. As described above, the materials of examples 1 to 7 have significantly higher current efficiencies than the materials of comparative examples 1 and 2, and the materials of examples 1 to 7 have superior CO₂ adsorption capacity than the materials of comparative examples 1 and 2.

### (Other embodiments)

The present disclosure is not limited to the embodiments described hereinabove, and may be modified in various ways without departing from the gist of the present disclosure. Further, means disclosed in the above embodiments may be appropriately combined within a range that can be implemented.

For example, in each of the above embodiments, as the CO₂ adsorbent 102b, an organic compound, an inorganic compound, a carbon material, or an organometallic complex is used alone, but these may be used in combination as appropriate.

Further, in each of the above embodiments, the working electrode binder 102d is disposed for holding the CO₂ adsorbent 102b on the working electrode substrate 102a, but the present disclosure is not limited to this. The working electrode binder 102d may be omitted.

A carbon dioxide recovery system is configured to separate carbon dioxide from gas containing the carbon dioxide via an electrochemical reaction and includes an electrochemical cell (101) including a working electrode (102) and a counter electrode (103). The working electrode includes a CO₂ adsorbent. The CO₂ adsorbent is configured to, when a first voltage is applied between the working electrode and the counter electrode, take in electrons flowing from the counter electrode to the working electrode and adsorb the carbon dioxide by a Coulomb force of the electrons without bonding to the carbon dioxide by sharing an electron orbital with the carbon dioxide. The CO₂ adsorbent is configured to, when a second voltage different from the first voltage is applied between the working electrode and the counter electrode, discharge the electrons from the working electrode to the counter electrode and desorb the carbon dioxide.

## Claims

1. A carbon dioxide recovery system that separates carbon dioxide from gas containing the carbon dioxide via an electrochemical reaction, the carbon dioxide recovery system comprising:
an electrochemical cell (101) including a working electrode (102) and a counter electrode (103), the working electrode including a CO₂ adsorbent, wherein
the CO₂ adsorbent is configured to:
when a first voltage is applied between the working electrode and the counter electrode:
take in electrons flowing from the counter electrode to the working electrode; and
adsorb the carbon dioxide by a Coulomb force of the electrons without bonding to the carbon dioxide by sharing an electron orbital with the carbon dioxide; and
when a second voltage different from the first voltage is applied between the working electrode and the counter electrode:
discharge the electrons from the working electrode to the counter electrode; and
desorb the carbon dioxide.

2. The carbon dioxide recovery system according to claim 1, wherein
the electrochemical cell includes:
an insulating layer (104) disposed between the working electrode and the counter electrode; and
an electrolyte material (106) covering the working electrode, the counter electrode and the insulating layer, and
the electrons taken in by the CO₂ adsorbent and ions contained in the electrolyte material form an electrical double layer when the CO₂ adsorbent adsorbs the carbon dioxide.

3. The carbon dioxide recovery system according to claim 1 or 2, wherein
the CO₂ adsorbent includes a CO₂ adsorption site that takes in the electrons when the first voltage is applied between the working electrode and the counter electrode and that discharges the electrons when the second voltage is applied between the working electrode and the counter electrode.

4. The carbon dioxide recovery system according to claim 3, wherein
the CO₂ adsorption site includes a plurality of elements, and
the electrons evenly spread over the plurality of elements when the CO2 adsorbent takes in the electrons.

5. The carbon dioxide recovery system according to any one of claims 1 to 4, wherein
the CO₂ adsorbent is an organic compound, and
the organic compound is an aromatic compound having at least one of a nitrogen atom or a sulfur atom in an aromatic ring.

6. The carbon dioxide recovery system according to claim 5, wherein
the organic compound includes at least one of benzothiadiazole, polyvinyl benzothiadiazole or polydiaza phthalimide.

7. The carbon dioxide recovery system according to any one of claims 1 to 4, wherein
the CO₂ adsorbent is an inorganic compound including a metal, and
the inorganic compound is configured to take in and discharge the electrons through a valence change of the metal.

8. The carbon dioxide recovery system according to claim 7, wherein
the inorganic compound includes at least one of an inorganic oxide, an inorganic nitride or an inorganic chalcogenide-based material.

9. The carbon dioxide recovery system according to claim 7 or 8, wherein the inorganic compound includes at least one of RuO₂, MbO₂ or MoS₂.

10. The carbon dioxide recovery system according to claim 1 or 2, wherein the CO₂ adsorbent is a porous material.

11. The carbon dioxide recovery system according to claim 10, wherein the porous material is a carbon material.

12. The carbon dioxide recovery system according to claim 11, wherein
the carbon material is at least one of a carbon black, a carbon nanotube, a graphene or an activated carbon.

13. The carbon dioxide recovery system according to claim 10, wherein the porous material is an organometallic complex.
